# EUROPEAN PATENT APPLICATION

(11) **EP 4 224 767 A1**
(43) Date of publication of application: **09.08.2023**
(21) Application number: 21874422.5
(22) Date of filing: 27.09.2021
(51) Int. Cl.: H04L 5/00, H04L 1/00

(54) **HARQ-ACK FEEDBACK METHOD, TERMINAL AND NETWORK-SIDE DEVICE**

(30) Priority: 30.09.2020 CN 202011064771
(71) Applicant: Vivo Mobile Communication Co., Ltd., Dongguan, Guangdong 523863 (CN)
(72) Inventor: HONG, Qi, Dongguan, Guangdong 523863 (CN); ZENG, Chaojun, Dongguan, Guangdong 523863 (CN)
(74) Representative: Murgitroyd & Company
(86) International application number: PCT/CN2021/120877
(87) International publication number: WO 2022/068762

(57) **Abstract**

Embodiments of this application provide a HARQ-ACK feedback method, a terminal, and a network-side device, which can reduce HARQ-ACK feedback overheads. The method includes: dividing, by a terminal, a plurality of physical downlink shared channels PDSCHs into one or more PDSCH groups; and feeding back, by the terminal, a HARQ-ACK for each PDSCH group.

## Description

### CROSS-REFERENCE TO RELATED APPLICATION

This application claims priority to Chinese Patent Application No. 202011064771.9, filed in China on September 30, 2020 and entitled "HARQ-ACK FEEDBACK METHOD, TERMINAL, AND NETWORK-SIDE DEVICE", which is incorporated herein by reference in its entirety.

### TECHNICAL FIELD

This application pertains to the field of communications technologies, and in particular relates to a hybrid automatic repeat request acknowledgement (Hybrid Automatic Repeat request Acknowledgement, HARQ-ACK) feedback method, a terminal, and a network-side device.

### BACKGROUND

In 5G new radio (New Radio, NR) systems, terminals support performing HARQ-ACK feedback for physical downlink shared channel (Physical Downlink Shared Channel, PDSCH). In the related art, a terminal feeds back a HARQ-ACK for each PDSCH, and therefore the terminal needs to feed back a large number of HARQ-ACK bits, which increases feedback overheads.

### SUMMARY

Embodiments of this application provide a HARQ-ACK feedback method, a terminal, and a network-side device, which can reduce HARQ-ACK feedback overheads.

According to a first aspect, a HARQ-ACK feedback method is provided. The method includes: dividing, by a terminal, a plurality of physical downlink shared channels PDSCHs into one or more PDSCH groups; and feeding back, by the terminal, a HARQ-ACK for each PDSCH group.

According to a second aspect, a HARQ-ACK feedback method is provided. The method includes: receiving, by a network-side device, a HARQ-ACK; where the HARQ-ACK is fed back for each PDSCH group by a terminal after the terminal divides a plurality of PDSCHs into one or more PDSCH groups.

According to a third aspect, a terminal is provided, including: a grouping module, configured to divide a plurality of PDSCHs into one or more PDSCH groups; and a sending module, configured to feed back a HARQ-ACK for each PDSCH group.

According to a fourth aspect, a network-side device is provided, including: a receiving module, configured to receive a HARQ-ACK; where the HARQ-ACK is fed back for each PDSCH group by a terminal after the terminal divides a plurality of PDSCHs into one or more PDSCH groups.

According to a fifth aspect, a terminal is provided, where the terminal includes a processor, a memory, and a program or instructions stored in the memory and executable on the processor, and when the program or instructions are executed by the processor, the method according to the first aspect is implemented.

According to a sixth aspect, a network-side device is provided, where the network-side device includes a processor, a memory, and a program or instructions stored in the memory and executable on the processor, and when the program or instructions are executed by the processor, the method according to the second aspect is implemented.

According to a seventh aspect, a readable storage medium is provided, where a program or instructions are stored in the readable storage medium, and when the program or the instructions are executed by a processor, the method according to the first aspect is implemented, or the method according to the second aspect is implemented.

According to an eighth aspect, a computer program product is provided, where the computer program product includes a processor, a memory, and a program or instructions stored in the memory and executable on the processor, and when the program or the instructions are executed by the processor, the method according to the first aspect or the method according to the second aspect is implemented.

According to a ninth aspect, a chip is provided, where the chip includes a processor and a communications interface, the communications interface is coupled to the processor, and the processor is configured to execute a program or instructions to implement the method according to the first aspect or the method according to the second aspect.

In the embodiments of this application, the terminal divides the plurality of PDSCHs into one or more PDSCH groups, and feeds back a HARQ-ACK for each PDSCH group. Because the number of PDSCH groups is less than the number of the plurality of PDSCHs, this helps reduce the number of feedback HARQ-ACK bits and reduce feedback overheads.

### BRIEF DESCRIPTION OF DRAWINGS

FIG. 1 is a block diagram of a wireless communications system according to an embodiment of this application;
FIG. 2 is a schematic flowchart of a HARQ-ACK feedback method according to an embodiment of this application;
FIG. 3 is a schematic diagram of a plurality of PDSCH time domain positions according to an embodiment of this application;
FIG. 4 is a schematic diagram of dividing a plurality of PDSCHs scheduled by one PDCCH into one group according to an embodiment of this application;
FIG. 5 is a schematic diagram of dividing a plurality of PDSCHs scheduled by one PDCCH into one group according to an embodiment of this application;
FIG. 6 is a schematic flowchart of a HARQ-ACK feedback method according to another embodiment of this application;
FIG. 7 is a schematic structural diagram of a terminal according to an embodiment of this application;
FIG. 8 is a schematic structural diagram of a network-side device according to another embodiment of this application;
FIG. 9 is a schematic structural diagram of a communications device according to an embodiment of this application;
FIG. 10 is a schematic structural diagram of a terminal according to an embodiment of this application; and
FIG. 11 is a schematic structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, in the specification and claims, "and/or" represents presence of at least one of connected objects, and the symbol "/" in this specification usually indicates an "or" relationship between associated objects.

It should be noted that techniques described in the embodiments of this application are not limited to a long term evolution (Long Term Evolution, LTE) or LTE-Advanced (LTE-Advanced, LTE-A) system, and may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communications system.

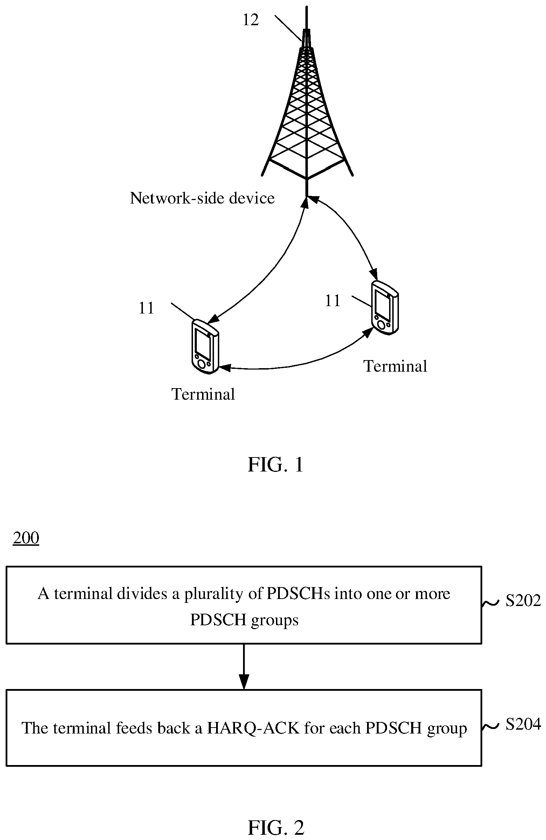

FIG. 1 is a block diagram of a wireless communications system to which the embodiments of this application are applicable. The wireless communications system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a wrist band, earphones, glasses, or the like. It should be noted that a specific type of the terminal 11 is not limited in the embodiments of this application. The network device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a next-generation NodeB (gNB), a home NodeB, a home evolved NodeB, a WLAN access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example and a specific type of the base station is not limited.

The following describes in detail a hybrid automatic repeat request acknowledgement (Hybrid Automatic Repeat request Acknowledgement, HARQ-ACK) feedback method, a terminal, and a network-side device provided in the embodiments of this application by using specific embodiments and application scenarios thereof with reference to the accompanying drawings.

As shown in FIG. 2, an embodiment of this application provides a HARQ-ACK feedback method 200. The method may be executed by a terminal. In other words, the method may be executed by software or hardware installed in the terminal. The method includes the following steps.

S202: The terminal divides a plurality of physical downlink shared channels (Physical Downlink Shared Channel, PDSCH) into one or more PDSCH groups.

In an example, the plurality of PDSCHs described in this step may be scheduled by one physical downlink control channel (Physical Downlink Control Channel, PDCCH), and the terminal may divide the plurality of PDSCHs scheduled by the one PDCCH into one PDSCH group or a plurality of PDSCH groups.

In another example, the plurality of PDSCHs described in this step may be scheduled by a plurality of PDCCHs, and each of the plurality of PDCCHs schedules one or more PDSCHs.

In this example, for example, the number of the plurality of PDSCHs is equal to the number of the plurality of PDCCHs, that is, one PDSCH is scheduled by one PDCCH. The terminal may divide the plurality of PDSCHs scheduled by the plurality of PDCCHs into one PDSCH group or a plurality of PDSCH groups.

In this example, for another example, the number of the plurality of PDSCHs is less than the number of the plurality of PDCCHs, and there are the following three possible grouping cases. Possible case 1: For the plurality of PDCCHs, the terminal divides one or more PDSCHs scheduled by each PDCCH into one PDSCH group. Possible case 2: When a specific PDCCH schedules a plurality of PDSCHs, the plurality of PDSCHs scheduled by the PDCCH are divided into one PDSCH group or a plurality of PDSCH groups. Possible case 3: The terminal may alternatively divide a plurality of PDSCHs scheduled by a plurality of PDCCHs into one PDSCH group.

In this step, each PDSCH group obtained after grouping may include one or more PDSCHs.

Optionally, in this step, the terminal may divide the plurality of PDSCHs based on the number Q of PDSCHs in each group. For example, Q=2, and the number of the plurality of PDSCHs is 5; in this case, the terminal divides the 5 PDSCHs into 3 PDSCH groups, and the number of PDSCHs included in the 3 PDSCH groups are 2, 2, and 1, or 1, 2, and 2, respectively. Optionally, a value of Q may be predefined; or may be determined by the terminal according to a predefined rule; or may be configured by higher layer; or may be indicated by a network-side device; or the like.

Optionally, in this step, the terminal may alternatively group the plurality of PDSCHs based on a predetermined duration. For example, the predetermined duration is 2 symbols; the number of the plurality of PDSCHs is 5, and symbol positions occupied by the 5 PDSCHs in a slot are: the 1st PDSCH occupies the 3rd symbol, the 2nd PDSCH occupies the 4th symbol, the 3rd PDSCH occupies the 6th symbol, the 4th PDSCH occupies the 9th symbol, and the 5th PDSCH occupies the 10th symbol. Then, the terminal groups the 5 PDSCHs: The 1st PDSCH and the 2nd PDSCH are present from a start time point of the 1st PDSCH to a time point of the start time point of the 1st PDSCH plus the predetermined duration, and therefore, the 1st PDSCH and the 2nd PDSCH are divided into one group; only the 3rd PDSCH is present from a start time point of the 3rd PDSCH to a time point of the start time point of the 3rd PDSCH plus the predetermined duration, and therefore the 3rd PDSCH alone is divided into one group; the 5th PDSCH and the 6th PDSCH are present from a start time point of the 4th PDSCH to a time point of the start time point of the 4th PDSCH plus the predetermined duration, and therefore, the 5th PDSCH and the 6th PDSCH are divided into one group. Optionally, the predetermined duration may be predefined; or may be determined by the terminal according to a predefined rule; or may be configured by higher layer; or may be indicated by a network-side device; or the like. In an example, the predetermined duration may be determined based on two slots (slot) for SCS120. Then, a predetermined duration for SCS240 has a length of four slots (a length of each slot is half of that for SCS 120); and a predetermined duration for SCS480 is a length of eight slots.

S204: The terminal feeds back a HARQ-ACK for each PDSCH group.

Optionally, in this step, the terminal may feed back one HARQ-ACK for each PDSCH group, and the HARQ-ACK may be a positive acknowledgement (Acknowledgment, ACK) or a negative acknowledgement (Negative-Acknowledgment, NACK).

In this step, for example, for any one PDSCH group in the one or more PDSCH groups obtained in S202: in a case that monitoring results of (one or more) PDSCHs in the PDSCH group are all ACK, the HARQ-ACK corresponding to the PDSCH group is ACK, and the terminal may feed back an ACK response for the PDSCH group; and in a case that a monitoring result of at least one PDSCH in the PDSCH group is NACK, the HARQ-ACK corresponding to the PDSCH group is NACK, and the terminal may feed back a NACK response for the PDSCH group.

Optionally, the PDSCH in this embodiment includes a semi-persistent scheduling (Semi-Persistent Scheduling, SPS) PDSCH release indication, and this embodiment can also be extended to other schemes requiring HARQ-ACK feedback.

According to the HARQ-ACK feedback method provided in this embodiment of this application, the terminal divides the plurality of PDSCHs into one or more PDSCH groups, and feeds back a HARQ-ACK for each PDSCH group. Because the number of PDSCH groups is less than the number of the plurality of PDSCHs, this helps reduce the number of feedback HARQ-ACK bits and reduce feedback overheads.

Optionally, the HARQ-ACK feedback method provided in this embodiment of this application may be applied to a system higher than 52.6 GHz (B52.6 GHz). The B52.6GHz system uses a large subcarrier spacing (SubCarrier Spacing, SCS), and in this case, a time of each slot (slot) becomes very short. If one PDCCH schedules a plurality of PDSCHs, time-domain positions of the PDSCHs are different and consecutive or have a small time interval, but have a same frequency-domain position and same modulation and coding scheme (Modulation and Coding Scheme, MCS) order in use. Based on the foregoing considerations, channels and signal-to-noise ratios (SINR) of the plurality of PDSCHs scheduled by one PDCCH are relatively close, and therefore there is a high probability that all the plurality of PDSCHs are either decoded correctly (feedback ACK) or decoded incorrectly (feedback NACK), that is, the HARQ-ACK feedback is relatively consistent. Based on the foregoing considerations, in this embodiment, grouping of the plurality of PDSCHs and feeding back of the HARQ-ACK for each PDSCH group by the terminal are reasonable in design, not leading to any additional transmission overheads.

For the PDSCH groups described in the foregoing embodiments, each PDSCH group may include Q PDSCHs, and indexes of the Q PDSCHs included in each PDSCH group are consecutive. The indexes are determined in chronological order of the plurality of PDSCHs, Q is a positive integer, and Q in this example is greater than or equal to 2.

In an example, the foregoing PDSCH index may be understood as a local number corresponding to each PDSCH in chronological order of the plurality of PDSCHs scheduled by the one PDCCH.

In another example, the PDSCH indexes may be understood as local numbers corresponding to the plurality of PDSCHs in chronological order of the plurality of PDSCHs scheduled by the plurality of PDCCHs.

Optionally, the number of the plurality of PDSCHs described in the foregoing embodiments is N, and the number of PDSCH groups obtained by grouping the N PDSCHs is M. In case (1), at least (M-1) of the PDSCH groups include the same number of PDSCHs, and 1 ≤ M ≤ N, where M and N are integers; or in case (2), at least two of the PDSCH groups include different numbers of PDSCHs.

For the foregoing case (1), for example, in the M PDSCH groups, the number of PDSCHs included in the first PDSCH group or the last PDSCH group may be different from the number of PDSCHs included in each of the remaining (M-1) PDSCH groups. The number of PDSCHs included in the remaining (M-1) PDSCH groups other than the first PDSCH group or the last PDSCH group is all equal.

For the foregoing case (2), for example, in the M PDSCH groups, the number of PDSCHs included in any two of the PDSCH groups is not equal.

For the PDSCH group described in the embodiments of this specification, (any one) PDSCH group includes Q PDSCHs, where Q is a positive integer, and Q may be obtained based on at least one of the following; or, the terminal may group a plurality of PDSCHs based on at least one of the following, so as to obtain Q after grouping:
(1) Being predefined: for example, a protocol stipulates that a value of Q is 2; for another example, the protocol stipulates a correspondence between a plurality of SCSs and a plurality of Qs, and the terminal obtains Q for grouping based on an SCS currently used for communication and the correspondence.
(2) Being determined according to a predefined rule: for example, the protocol stipulates a correspondence between a plurality of SCSs and a plurality of Qs, and the terminal obtains Q for grouping based on an SCS currently used for communication and the correspondence; for another example, the terminal determines PDSCH groups based on a predetermined duration, and obtains Q PDSCHs included in each group.
(3) Being configured by higher layer: for example, the higher layer directly configures a value of Q to be 2, or the higher layer configures a set of values of Q; in this way, the terminal may determine Q for grouping according to a dynamic signaling indication of the network-side device; or the terminal may determine Q for grouping according to a predefined rule (for example, based on a correspondence between a plurality of SCSs and a plurality of Qs).
(4) Being indicated by a network-side device: for example, the network-side device indicates Q using dynamic signaling; or, the network-side device indicates one Q from a set of values of Q using dynamic signaling, where the set of values of Q may be configured by the higher layer.

Optionally, in a case that Q is obtained based on a combination of one or more of being predefined, being determined according to a predefined rule, being configured by higher layer, and being indicated by the network-side device, the following step may be further included before S202: the terminal determines Q based on at least one of the following, or the terminal groups the plurality of PDSCHs based on at least one of the following, so as to obtain Q after grouping:
(1) Subcarrier spacing SCS size: for example, the protocol stipulates or the higher layer configures a correspondence between a plurality of SCSs and a plurality of Qs, and the terminal obtains Q for grouping based on an SCS size currently used for communication and the correspondence; herein, the terminal uses the SCS size to obtain Q for grouping, which may be referred to as determining Q by the terminal according to a predefined rule.
(2) Control channel element (Control Channel Element, CCE) aggregation levels of one or more PDCCHs for scheduling the plurality of PDSCHs: for example, the protocol stipulates or the higher layer configures a correspondence between a plurality of CCE aggregation levels and a plurality of Qs, and the terminal obtains Q for grouping based on a CCE aggregation level of PDCCH and the correspondence; and herein, the terminal uses the CCE aggregation level of PDCCH to obtain Q for grouping, which may be referred to as determining Q by the terminal according to a predefined rule.
(3) MCS for the plurality of PDSCHs: for example, the terminal divides a plurality of PDSCHs with same MCS and consecutive in time domain into one group; and herein, the terminal obtains Q for grouping based on the MCS, which may be referred to as determining Q by the terminal according to a predefined rule.

It can be understood that, in other examples, the terminal may alternatively determine Q for grouping based on a combination of at least two of the foregoing SCS size, CCE aggregation level, and MCS. Generally, a larger SCS indicates more PDSCHs included in each group; and a higher CCE level indicates fewer PDSCHs included in each group.

In an example, Q is obtained according to a predefined rule, and the predefined rule includes a predetermined duration. In this case, as described in Embodiment 200, the dividing, by the terminal, a plurality of PDSCHs into one or more PDSCHs includes: for the plurality of PDSCHs, dividing, by the terminal, one or more PDSCHs within the predetermined duration into one PDSCH group, so as to obtain one or more PDSCH groups.

The dividing, by the terminal, one or more PDSCHs within the predetermined duration T into one PDSCH group includes: determining, by the terminal, a start time T1 of the predetermined duration, and in chronological order of the plurality of PDSCHs, dividing one or more PDSCHs within (T1+T) into one PDSCH group; where an interval between a start time of the first PDSCH in the PDSCH group and a start time of the last PDSCH is less than or equal to T, or an interval between the start time of the first PDSCH in the PDSCH group and an end time of the last PDSCH is less than or equal to T.

In this embodiment, specifically, for example, the terminal may determine, based on a predetermined duration, an interval between start times of a plurality of PDSCHs or an interval between a start time of the first PDSCH and an end time of another PDSCH does not exceed the predetermined duration, and uses PDSCHs with continuous indexes as PDSCHs corresponding to one group. For example, an interval between a start time of PDSCH n and a start time of each of PDSCH n+1, ..., and PDSCH n+m does not exceed the predetermined duration, and then PDSCH n, PDSCH n+ 1, ..., and PDSCH n+m all correspond to a same group. A next group is considered to start from PDSCH n+m+1. Similarly, PDSCH groups may alternatively be determined based on the start time of PDSCH n and an end time of PDSCH n+m. The predetermined duration may be predefined by the protocol, or configured by the higher layer, or dynamically indicated by the network-side device. In a case of being dynamically indicated by the network-side device, the network-side device may directly indicate a value of the predetermined duration; or a set may be configured by the higher layer first, and the network-side device dynamically indicates one in the set as the predetermined duration.

In another example, Q is obtained according to the indication of the network-side device. In this case, the embodiment 200 further includes one of the following:
(1) receiving, by the terminal, first indication information of the network-side device, where the first indication information is used to indicate one Q, and the one Q is applicable to each of the PDSCH groups;
(2) receiving, by the terminal, second indication information of the network-side device, where the second indication information is used to indicate a plurality of Qs, and the plurality of Qs are respectively applicable to the plurality of PDSCH groups; and
(3) receiving, by the terminal, third indication information of the network-side device, where the third indication information is used to indicate one Q in a preconfigured set, and the one Q is applicable to each of the PDSCH groups.

In this embodiment, specifically, for example, the network-side device directly indicates one Q, and the one Q corresponds to all groups. The actual number of PDSCHs included in the last group or the first group may be less than or equal to Q; or the network-side device directly indicates a plurality of Qs, each Q being applied to one PDSCH group; or a set of Qs is preconfigured by the higher layer, and the network-side device dynamically indicates application of a specific Q, applied to each PDSCH group. Optionally, the network-side device may indicate the foregoing content in downlink control information (Downlink Control Information, DCI) for scheduling PDSCH, or may add a corresponding indication field to the DCI, or reinterpret an existing field.

Optionally, as described in the foregoing embodiments, the dividing, by the terminal, a plurality of PDSCHs into one or more PDSCHs includes: in a case that no code block group (Code Block Group, CBG)-based transmission is configured for a serving cell in which the plurality of PDSCHs are located, dividing, by the terminal, the plurality of PDSCHs into one or more PDSCH groups. In this embodiment, in a case that CBG-based transmission is configured for the serving cell in which the plurality of PDSCHs are located (that is, PDSCH-CodeBlockGroupTransmission is configured), the PDSCHs are not grouped, and in this case, a scheme of feeding back one HARQ-ACK for one PDSCH in the related art may be executed.

In order to describe in detail the HARQ-ACK feedback method provided in the embodiments of this application, the following provides descriptions with reference to several specific embodiments.

### Embodiment 1

In this embodiment, the terminal (UE) is configured with a semi-static codebook, and the semi-static codebook refers to a HARQ-ACK codebook generation manner in which a size of the HARQ-ACK codebook does not change dynamically with an actual data scheduling status. In this manner, the size of the HARQ-ACK codebook is determined based on a parameter predefined by the protocol or configured using radio resource control (Radio Resource Control, RRC). Generation of the codebook mainly depends on: 1. a set of kls; 2. a row index set provided by PDSCH-TimeDomainResourceAllocation; 3. uplink and downlink configuration parameter of higher layer; 4. the number of cells configured using RRC; 5. HARQ space binding parameter; and 6. CBG parameter and a maximum number of codewords supported by each cell.

In this embodiment, the UE may build a codebook according to the following parameters: 1. a set of kls; 2. a row index set provided by PDSCH-TimeDomainResourceAllocation; 3. uplink and downlink configuration parameter of higher layer; 4. the number of cells configured using RRC; 5. HARQ space binding parameter; and 6. CBG parameter and a maximum number of codewords supported by each cell.

In this embodiment, the following assumptions may be made: 1. The UE merely supports receiving a maximum of one PDSCH in one slot; 2. No CBG-based PDSCH transmission is configured for the UE, that is, no parameter PDSCH-CodeBlockGroupTransmission is configured for the UE; and 3. only one codeword is sent.

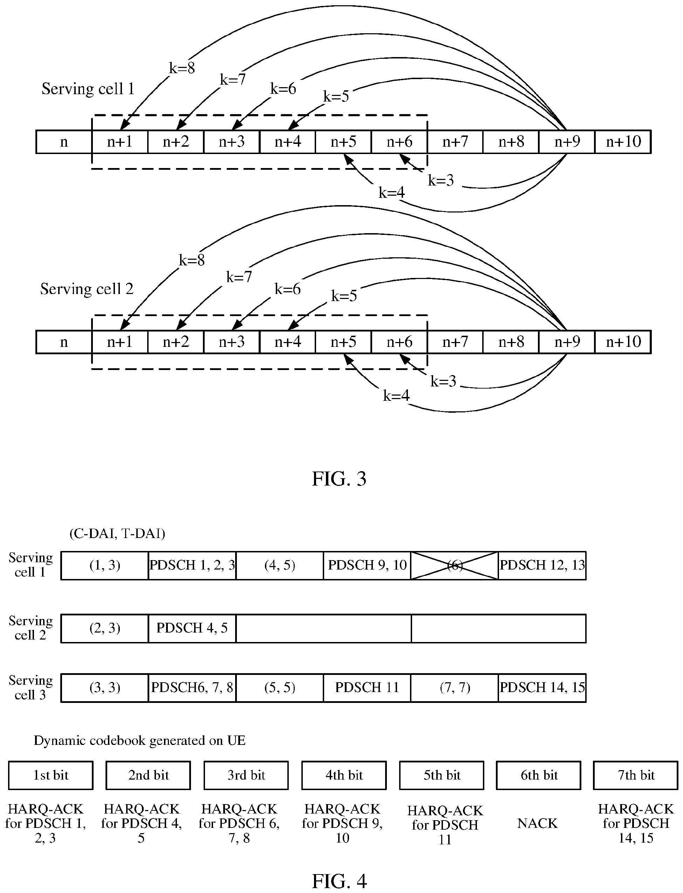

As shown in FIG. 3, possible values of k1 in RRC configuration in this embodiment are {3,4,5,6,7,8}, and transmission of all downlinks is configured for a frame structure of slots n+1, n+2, ..., and n+6. According to the existing protocol scheme, for 6 PDSCH reception opportunities in slots n+1, n+2, ..., and n+6, a serving cell 1 needs to feed back 6 bits of HARQ-ACK information at a position of slot 9, and a serving cell 2 needs to feed back 6 bits of HARQ-ACK information at a position of slot 9, that is, there is a total of 12 bits of HARQ-ACK information.

According to the HARQ-ACK feedback method provided in this embodiment of this application, a grouping rule of each serving cell is configured. For example, it is assumed herein that Q for the serving cell 1 is 2, that is, each PDSCH group includes 2 PDSCHs. In this case, in the serving cell 1, k1=8 and k1=7 are one group; k1=6 and k1=5 are one group; and k1=4 and k1=3 are one group; then, a total of 3 bits of HARQ-ACK information need to be fed back. In the serving cell 2, Q=3; in this case, k1=8, k1=7, and k1=6 are one group, and k1=5, k1=4, and k1=3 are one group; then, a total of 2 bits of HARQ-ACK information need to be fed back. The two serving cells feed back a total of 5 bits of HARQ-ACK information, much smaller than 12 bits of HARQ-ACK information in the related art.

Based on the description of the examples shown in FIG. 3 above, assuming that there are N PDSCH reception opportunities in each serving cell and a same value of Q is used, the number of HARQ-ACK bits corresponding to this serving cell is M=ceiling(M/Q), where the ceiling() function indicates rounding up.

In this embodiment, if the number of PDSCHs in the last PDSCH group is less than Q, the PDSCHs are divided into a separate group. For example, assuming that there is another k1=9 in the serving cell 1 (due to Q=2 in the serving cell 1), the PDSCH is classified into a separate group; assuming that there is another k1=9 in the serving cell 2 (due to Q=3 in the serving cell 2), the PDSCH is classified into a separate group.

In this embodiment, for a PDSCH reception opportunity set (that is, the 6 slots n+1, n+2, ..., and n+6) corresponding to a time domain position n+9, a manner of determining a codebook M_{A,C} for the serving cell is shown in the following steps:
Step 1: Determine a PDSCH reception opportunity set for each serving cell.

In this step, kls may be first traversed based on a protocol flow. For each k1 meeting requirements, it is determined whether there is a conflict between a PDSCH-TDRA configured by RRC for a serving cell c and an uplink slot or symbol configured in an uplink and downlink parameter (tdd-UL-DL-ConfigurationCommon, or tdd-UL-DL-ConfigurationCommon2, or tdd-UL-DL-Configcondicated) configured by RRC; and if there is a conflict, it is not included into a candidate PDSCH reception set.

Step 2: Group a plurality of PDSCH receiver sets based on Q.

First, for the serving cell 1, PDSCH receiver sets are grouped based on its Q value, namely Q=2. That is, for M_{A,C} of the cell 1, M_{A,C,1}={1,2,3}. 1 represents k1=3 and k1=4 in the cell 1; 2 represents k1=5 and k1=6 in the cell 1; and 3 represents k1=7 and k1=8 in the cell 1. If a remaining k1 is not enough to reach Q (assuming that there is k1=9), the k1 is classified into a separate group.

Then, for the serving cell 2, PDSCH receiver sets are grouped based on its Q value, namely Q=3. That is, for M_{A,C} of the cell 2, M_{A,C,2}={1,2}. 1 represents k1=3, k1=4, and k1=5 in the cell 2; and 2 represents k1=6, k1=7, and k1=8 in the cell 2. If a remaining k1 is not enough to reach Q (assuming that there is k1=9), the k1 is classified into a separate group.

In this embodiment, once a value of a HARQ-ACK bit is NACK, when the network-side device determines that a PDSCH group corresponding to this HARQ-ACK bit has one or more corresponding actual PDSCH transmissions, it is considered that HARQ-ACK feedbacks for the one or more corresponding actual PDSCH transmissions are all NACKs, and retransmissions corresponding to one or more PDSCHs can be scheduled as required.

The number Q of scheduled PDSCHs included in each group may be determined in one of the following manners: being a value predefined by a protocol, being determined according to a protocol pre-defined rule, being configured by higher layer, and being dynamically indicated by the network. For details, refer to the descriptions of the foregoing embodiments.

Specifically, the terminal may determine Q based on an SCS size, a CCE aggregation level of PDCCH, MCS of a scheduled PDSCH, or the like. For example, a larger SCS indicates more PDSCHs included in each group; and a higher CCE level indicates fewer PDSCHs included in each group.

### Embodiment 2

In this embodiment, the terminal (UE) is configured with a dynamic codebook. The dynamic codebook refers to a codebook generation manner in which a size of the HARQ-ACK codebook changes dynamically with an actual data scheduling status. Feedback bits are reserved for each actually used downlink assignment index (Downlink Assignment Index, DAI) value through DAI counting for actually scheduled PDSCH transmissions/SPS PDSCH release indications. Based on other DAIs detected, the UE infers that PDSCHs or SPS PDSCH release indications corresponding to some DAIs have not been received, and therefore a corresponding feedback bit is set to NACK; otherwise, a corresponding feedback bit is set based on a decoding result of a PDSCH transmission corresponding to each PDSCH assignment index, and a corresponding feedback bit of a detected SPS PDSCH release indication is set to ACK.

In this embodiment, DCI for scheduling PDSCH includes DAI information, and the UE may determine the number of HARQ-ACK bits and a bit sequence according to the DAI information, that is, a correspondence between PDSCHs and HARQ-ACK information bits.

In this embodiment, two relatively important parameters are: counter DAI (Counter DAI, C-DAI) C-DAI and total DAI (Total DAI, T-DAI). In this embodiment, assuming that a plurality of scheduled PDSCHs are one group, a statistics collection order for C-DAI is: first in ascending order of serving cell indexes, and then in ascending order of start time points of PDCCH monitoring occasions.

As shown in FIG. 4, in this example, there are three serving cells, numbered 1, 2, and 3. For a PDCCH monitoring occasion, C-DAI numbering is first performed on DCI sent in the serving cell 1, and then C-DAI numbering is performed on DCI sent in the serving cell 2 and serving cell 3. Therefore, for the first PDCCH monitoring occasion, a C-DAI number for the serving cell 1 is 1, a C-DAI number for the serving cell 2 is 2, and a C-DAI number for the serving cell 3 is 3. T-DAI represents the total number of PDSCH receptions scheduled by DCI 1_0 and DCI 1_1 or the total number of SPS releases indicated by DCI 1_0 until the current PDCCH monitoring occasion, and a value of T-DAI is the same for all serving cells on the same PDCCH monitoring occasion, where the T-DAI is updated with a PDCCH monitoring occasion index. Therefore, at the first PDCCH monitoring occasion shown in FIG. 4, the value of T-DAI is 3.

This embodiment 2 may be implemented in the following manner a or manner b.

Manner (a): A plurality of scheduled PDSCHs are divided into one group, and the plurality of PDSCHs may be scheduled by one PDCCH, or one PDSCH may be scheduled by one PDCCH.

As shown in FIG. 4, in the serving cell 1, PDSCHs 1, 2, and 3 are one group; PDSCHs 9 and 10 are one group; and PDSCHs 12 and 13 are one group. In the serving cell 2, PDSCHs 4 and 5 are one group. In the serving cell 3, PDSCHs 6, 7, and 8 are one group; PDSCH 11 is one group; and PDSCHs 14 and 15 are one group. Being one group represents a plurality of PDSCHs scheduled by one PDCCH being one group, for example, one PDCCH may schedule PDSCHs 1, 2, and 3 simultaneously, and the three PDSCHs are one group.

According to the existing protocol that one piece of DCI can schedule only one PDSCH transmission, a total of 15 pieces of DCI are required to schedule 15 PDSCHs, and 15 bits of HARQ-ACK information are required. However, according to the method provided in this embodiment of this application, only 7 bits of HARQ-ACK information are required. If missing detection occurs at the 6th bit position (as shown in FIG. 4), the network-side device may retransmit PDSCHs 12 and 13.

It should be noted that FIG. 4 shows a scenario where one PDCCH schedules a plurality of PDSCHs, and is also applicable to a scenario where one PDCCH schedules one PDSCH. For example, PDSCHs 1, 2, and 3 are scheduled by three PDCCHs, respectively.

Manner (b): A plurality of PDSCHs scheduled by one PDCCH may be divided into one or more groups.

In this implementation, assuming that the number of scheduled PDSCHs in each group is Q and one piece of DCI schedules N PDSCHs, the PDSCHs scheduled by this DCI are divided into M=ceiling(N/Q) groups, the first (M-1) groups each include Q adjacent PDSCHs, and the last group includes N-(M-1)*Q PDSCHs.

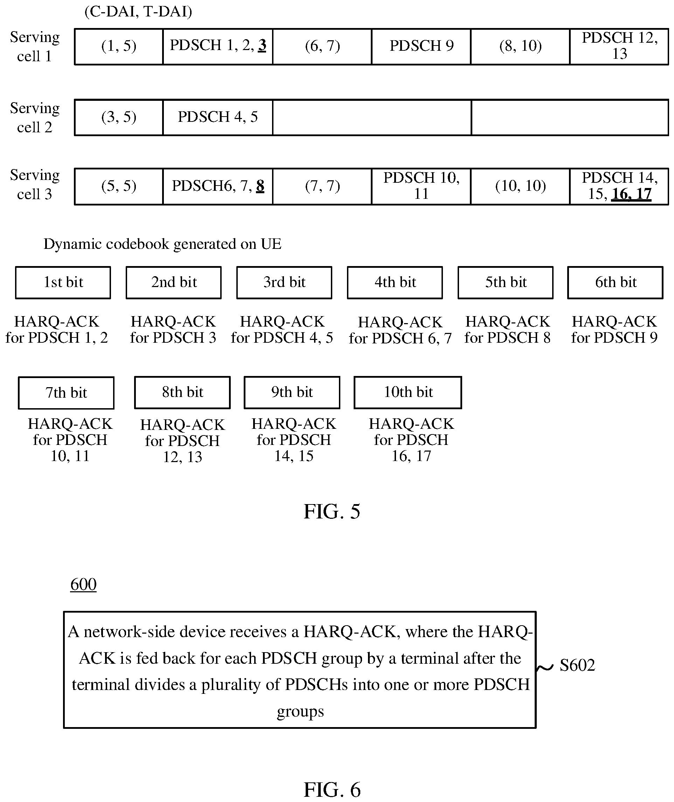

As shown in FIG. 5, it is assumed that the number of scheduled PDSCHs in each group in three serving cells is 2, that is, Q=2. In the serving cell 1, if one PDCCH schedules PDSCHs 1, 2, and 3, PDSCH 1 and PDSCH 2 are one group, and PDSCH 3 is one group; if one PDCCH schedules PDSCH 9, PDSCH 9 is one group; and if one PDCCH schedules PDSCHs 12 and 13, PDSCH 12 and PDSCH 13 are one group. In the serving cell 2, if one PDCCH schedules PDSCHs 4 and 5, PDSCH 4 and PDSCH 5 are one group. In the serving cell 3, if one PDCCH schedules PDSCHs 6, 7, and 8, PDSCH 6 and PDSCH 7 are one group and PDSCH 8 is one group; if one PDCCH schedules PDSCHs 10 and 11, PDSCH 10 and PDSCH 11 are one group; if one PDCCH schedules PDSCHs 14, 15, 16, and 17, PDSCHs 14 and 15 are one group, and PDSCHs 16 and 17 are one group.

For the first PDCCH monitoring occasion, the PDCCH in the serving cell 1 schedules two groups of PDSCHs, namely PDSCHs 1 and 2 and PDSCH 3, and therefore a C-DAI for the serving cell 1 is 1 (starting from 1, with a total of two counts). The PDCCH in the serving cell 2 schedules one group of PDSCHs, namely PDSCHs 4 and 5, and therefore a C-DAI for the cell 2 is the C-DAI of the serving cell 1 plus 1, that is, the C-DAI for serving cell 2 is 3. The PDCCH in the serving cell 3 schedules two groups of PDSCHs, namely PDSCHs 6 and 7, and PDSCH 8, and therefore a C-DAI for the serving cell 3 is the C-DAI of the serving cell 2 plus 2, that is, the C-DAI for serving cell 3 is 5. The number of all PDSCH groups scheduled in the current PDCCH monitoring occasion is considered during T-DAI counting, and the value is 5 for the first PDCCH monitoring occasion.

For the second PDCCH monitoring occasion, the PDCCH in the serving cell 1 schedules one group of PDSCHs, namely PDSCH 9. Therefore, the C-DAI for the serving cell 1 is the previous one plus 1, that is, the C-DAI for the serving cell 1 is 6. The serving cell 2 has no PDCCH monitoring occasion. The PDCCH in the serving cell 3 schedules one group of PDSCHs, namely PDSCHs 10 and 11, and therefore a C-DAI for the serving cell 3 is the previous C-DAI plus 1, that is, the C-DAI for the serving cell 3 is 7. For the T-DAI for the second PDCCH monitoring occasion, a value is 7.

For the third PDCCH monitoring occasion, the PDCCH in the serving cell 1 schedules one group of PDSCHs, namely PDSCHs 12 and 13. Therefore, the C-DAI for the serving cell 1 is the previous one plus 1, that is, the C-DAI for the serving cell 1 is 8. The serving cell 2 has no PDCCH monitoring occasion. The PDCCH in the serving cell 3 schedules two groups of PDSCHs, namely PDSCHs 14 and 15 and PDSCHs 16 and 17, and therefore a C-DAI for the serving cell 3 is the previous C-DAI plus 2, that is, the C-DAI for the serving cell 3 is 10. For the T-DAI for the third PDCCH monitoring occasion, a value is 10.

According to the HARQ-ACK feedback method provided in this embodiment of this application, only 10 bits of HARQ-ACK information are required. If missing detection occurs at the 9th bit position, the network-side device retransmits information of PDSCH 14 and PDSCH 15.

The number Q of scheduled PDSCHs included in each group may be determined in one of the following manners: being a value predefined by a protocol, being determined according to a protocol pre-defined rule, being configured by higher layer, and being dynamically indicated by the network. For details, refer to the descriptions of the foregoing embodiments.

Specifically, the terminal may determine Q based on an SCS size, a CCE aggregation level of PDCCH, MCS of a scheduled PDSCH, or the like. For example, a larger SCS indicates more PDSCHs included in each group; and a higher CCE level indicates fewer PDSCHs included in each group.

The foregoing describes in detail the HARQ-ACK feedback method according to the embodiments of this application with reference to FIG. 2 to FIG. 5. The following describes in detail a HARQ-ACK feedback method according to another embodiment of this application with reference to FIG. 6. It can be understood that interaction between the network-side device and the terminal described from the network-side device is the same as the description on the terminal side in the method shown in FIG. 2. To avoid repetition, related descriptions are appropriately omitted.

FIG. 6 is a schematic flowchart of implementing a HARQ-ACK feedback method according to this embodiment of this application, and the method is applicable to a network-side device. As shown in FIG. 6, the method 600 includes the following steps:

S602: The network-side device receives a HARQ-ACK, where the HARQ-ACK is fed back for each PDSCH group by a terminal after the terminal divides a plurality of PDSCHs into one or more PDSCH groups.

In this embodiment of this application, the terminal divides the plurality of PDSCHs into one or more PDSCH groups, and feeds back a HARQ-ACK for each PDSCH group, so that the network-side device receives the HARQ-ACK. Because the number of PDSCH groups is less than the number of the plurality of PDSCHs, this helps reduce the number of feedback HARQ-ACK bits and reduce feedback overheads.

Optionally, in an embodiment, the method further includes: sending a PDCCH; where the plurality of PDSCHs are scheduled by one PDCCH; or the plurality of PDSCHs are scheduled by a plurality of PDCCHs, and each of the plurality of PDCCHs schedules one or more PDSCHs.

Optionally, in an embodiment, indexes of Q PDSCHs included in the PDSCH group are consecutive, the indexes are determined in chronological order of the plurality of PDSCHs, and Q is a positive integer.

Optionally, in an embodiment, the number of the plurality of PDSCHs is N, the number of the PDSCH groups is M, at least (M-1) of the PDSCH groups include the same number of PDSCHs, and 1 ≤ M ≤ N, where M and N are integers.

Optionally, in an embodiment, at least two of the PDSCH groups include different numbers of PDSCHs.

Optionally, in an embodiment, the PDSCH group includes Q PDSCHs, Q is a positive integer, and Q is obtained based on at least one of the following: being predefined; being determined according to a predefined rule; being configured by higher layer; and being indicated by a network-side device.

Optionally, in an embodiment, Q is determined by the terminal based on at least one of the following: subcarrier spacing SCS size; control channel element CCE aggregation levels of one or more PDCCHs for scheduling the plurality of PDSCHs; and modulation and coding scheme MCS for the plurality of PDSCHs.

Optionally, in an embodiment, the method further includes one of the following: sending first indication information, where the first indication information is used to indicate one Q, and the one Q is applicable to each of the PDSCH groups; sending second indication information, where the second indication information is used to indicate a plurality of Qs, and the plurality of Qs are respectively applicable to the plurality of PDSCH groups; and sending third indication information, where the third indication information is used to indicate one Q in a preconfigured set, and the one Q is applicable to each of the PDSCH groups.

Optionally, in an embodiment, one HARQ-ACK is fed back for each of the PDSCH groups.

Optionally, in an embodiment, in a case that monitoring results of PDSCHs in the PDSCH group are all ACK, the HARQ-ACK corresponding to the PDSCH group is ACK; and in a case that a monitoring result of at least one PDSCH in the PDSCH group is NACK, the HARQ-ACK corresponding to the PDSCH group is NACK.

Optionally, in an embodiment, no code block group CBG-based transmission is configured for a serving cell in which the plurality of PDSCHs are located.

It should be noted that, for the HARQ-ACK feedback method provided in the embodiments of this application, the execution subject may be a terminal, or a control module for executing the HARQ-ACK feedback method in the terminal. In the embodiments of this application, the terminal provided by the embodiments of this application is described by using the HARQ-ACK feedback method being executed by the terminal as an example.

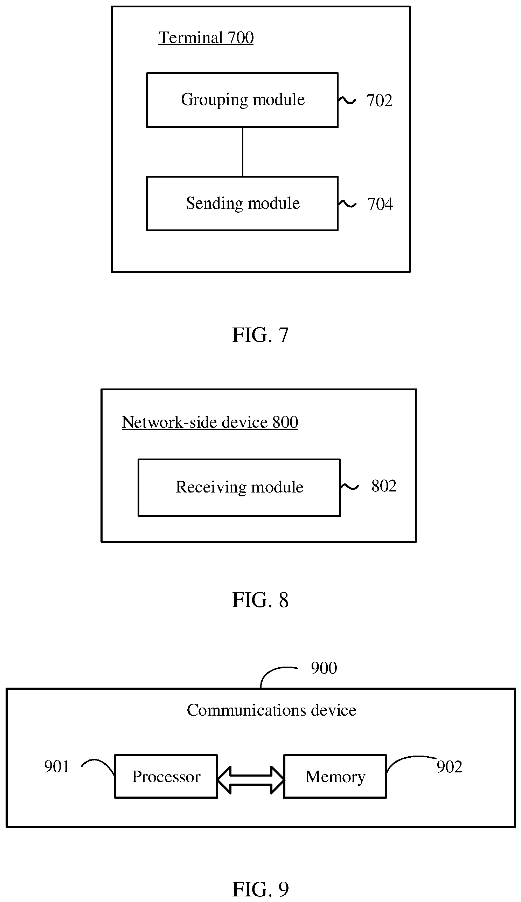

FIG. 7 is a schematic structural diagram of a terminal according to an embodiment of this application. As shown in FIG. 7, the terminal 700 includes the following modules.
a grouping module 702, configured to divide a plurality of PDSCHs into one or more PDSCH groups; and
a sending module 704, configured to feed back a HARQ-ACK for each PDSCH group.

In this embodiment of this application, the terminal divides the plurality of PDSCHs into one or more PDSCH groups, and feeds back a HARQ-ACK for each PDSCH group. Because the number of PDSCH groups is less than the number of the plurality of PDSCHs, this helps reduce the number of feedback HARQ-ACK bits and reduce feedback overheads.

Optionally, in an embodiment, the plurality of PDSCHs are scheduled by one physical downlink control channel PDCCH; or the plurality of PDSCHs are scheduled by a plurality of PDCCHs, and each of the plurality of PDCCHs schedules one or more PDSCHs.

Optionally, in an embodiment, indexes of Q PDSCHs included in the PDSCH group are consecutive, the indexes are determined in chronological order of the plurality of PDSCHs, and Q is a positive integer.

Optionally, in an embodiment, the number of the plurality of PDSCHs is N, the number of the PDSCH groups is M, at least (M-1) of the PDSCH groups include the same number of PDSCHs, and 1 ≤ M ≤ N, where M and N are integers.

Optionally, in an embodiment, at least two of the PDSCH groups include different numbers of PDSCHs.

Optionally, in an embodiment, the PDSCH group includes Q PDSCHs, Q is a positive integer, and Q is obtained based on at least one of the following: being predefined; being determined according to a predefined rule; being configured by higher layer; and being indicated by a network-side device.

Optionally, in an embodiment, the terminal 700 further includes: a determining module, configured to determine Q based on at least one of the following: subcarrier spacing SCS size; control channel element CCE aggregation levels of one or more PDCCHs for scheduling the plurality of PDSCHs; and modulation and coding scheme MCS for the plurality of PDSCHs.

Optionally, in an embodiment, Q is obtained according to the predefined rule, and the predefined rule includes a predetermined duration; and the grouping module 702 may be configured to, for the plurality of PDSCHs, divide one or more PDSCHs within the predetermined duration into one PDSCH group, so as to obtain one or more PDSCH groups.

Optionally, in an embodiment, the grouping module 702 may be configured to determine a start time T1 of the predetermined duration, and in chronological order of the plurality of PDSCHs, divide one or more PDSCHs within (T1+T) into one PDSCH group, where an interval between a start time of the first PDSCH in the PDSCH group and a start time of the last PDSCH is less than or equal to T, or an interval between the start time of the first PDSCH in the PDSCH group and an end time of the last PDSCH is less than or equal to T.

Optionally, in an embodiment, Q is obtained according to an indication of the network-side device. The terminal 700 further includes: a receiving module, configured to perform one of the following: receiving first indication information of the network-side device, where the first indication information is used to indicate one Q, and the one Q is applicable to each of the PDSCH groups; receiving second indication information of the network-side device, where the second indication information is used to indicate a plurality of Qs, and the plurality of Qs are respectively applicable to the plurality of PDSCH groups; and receiving third indication information of the network-side device, where the third indication information is used to indicate one Q in a preconfigured set, and the one Q is applicable to each of the PDSCH groups.

Optionally, in an embodiment, one HARQ-ACK is fed back for each of the PDSCH groups.

Optionally, in an embodiment, in a case that monitoring results of PDSCHs in the PDSCH group are all ACK, the HARQ-ACK corresponding to the PDSCH group is ACK; and in a case that a monitoring result of at least one PDSCH in the PDSCH group is NACK, the HARQ-ACK corresponding to the PDSCH group is NACK.

Optionally, in an embodiment, the grouping module 702 may be configured to: in a case that no code block group CBG-based transmission is configured for a serving cell in which the plurality of PDSCHs are located, divide the plurality of PDSCHs into one or more PDSCH groups.

For the terminal 700 in this embodiment of this application, refer to the processes of the method 200 in the corresponding embodiment of this application, and the units or modules of the terminal 700 and other operations and/or functions described above are used to implement the corresponding processes in the method 200, with the same or equivalent technical effects achieved. For brevity, details are not repeated herein.

The terminal in this embodiment of this application may be an apparatus, or may be a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The terminal in this embodiment of this application may be an apparatus having an operating system. The operating system may be an Android (Android) operating system, an iOS operating system, or other possible operating systems, and is not specifically limited in the embodiments of this application.

The terminal provided in this embodiment of this application is capable of implementing the processes implemented in the method embodiments in FIG. 2 to FIG. 5, with the same technical effects achieved. To avoid repetition, details are not described herein again.

FIG. 8 is a schematic structural diagram of a network-side device according to an embodiment of this application. As shown in FIG. 8, the network-side device 800 includes: a receiving module 802, configured to receive a HARQ-ACK; where the HARQ-ACK is fed back for each PDSCH group by a terminal after the terminal divides a plurality of PDSCHs into one or more PDSCH groups.

In this embodiment of this application, the terminal divides the plurality of PDSCHs into one or more PDSCH groups, and feeds back a HARQ-ACK for each PDSCH group, so that the network-side device receives the HARQ-ACK. Because the number of PDSCH groups is less than the number of the plurality of PDSCHs, this helps reduce the number of feedback HARQ-ACK bits and reduce feedback overheads.

Optionally, in an embodiment, the network-side device 800 further includes: a sending module, configured to send a PDCCH; where the plurality of PDSCHs are scheduled by one PDCCH; or the plurality of PDSCHs are scheduled by a plurality of PDCCHs, and each of the plurality of PDCCHs schedules one or more PDSCHs.

Optionally, in an embodiment, indexes of Q PDSCHs included in the PDSCH group are consecutive, the indexes are determined in chronological order of the plurality of PDSCHs, and Q is a positive integer.

Optionally, in an embodiment, the number of the plurality of PDSCHs is N, the number of the PDSCH groups is M, at least (M-1) of the PDSCH groups include the same number of PDSCHs, and 1 ≤ M ≤ N, where M and N are integers.

Optionally, in an embodiment, at least two of the PDSCH groups include different numbers of PDSCHs.

Optionally, in an embodiment, the PDSCH group includes Q PDSCHs, Q is a positive integer, and Q is obtained based on at least one of the following: being predefined; being determined according to a predefined rule; being configured by higher layer; and being indicated by a network-side device.

Optionally, in an embodiment, Q is determined by the terminal based on at least one of the following: subcarrier spacing SCS size; control channel element CCE aggregation levels of one or more PDCCHs for scheduling the plurality of PDSCHs; and modulation and coding scheme MCS for the plurality of PDSCHs.

Optionally, in an embodiment, the network-side device 800 further includes: a sending module, configured to perform one of the following: sending first indication information, where the first indication information is used to indicate one Q, and the one Q is applicable to each of the PDSCH groups; sending second indication information, where the second indication information is used to indicate a plurality of Qs, and the plurality of Qs are respectively applicable to the plurality of PDSCH groups; and sending third indication information, where the third indication information is used to indicate one Q in a preconfigured set, and the one Q is applicable to each of the PDSCH groups.

Optionally, in an embodiment, one HARQ-ACK is fed back for each of the PDSCH groups.

Optionally, in an embodiment, in a case that monitoring results of PDSCHs in the PDSCH group are all ACK, the HARQ-ACK corresponding to the PDSCH group is ACK; and in a case that a monitoring result of at least one PDSCH in the PDSCH group is NACK, the HARQ-ACK corresponding to the PDSCH group is NACK.

Optionally, in an embodiment, no code block group CBG-based transmission is configured for a serving cell in which the plurality of PDSCHs are located.

For the network-side device 800 in this embodiment of this application, refer to the processes of the method 600 in the corresponding embodiment of this application, and the units or modules of the network-side device 800 and other operations and/or functions described above are used to implement the corresponding processes in the method 600, with the same or equivalent technical effects achieved. For brevity, details are not repeated herein.

Optionally, as shown in FIG. 9, an embodiment of this application further provides a communications device 900, including a processor 901, a memory 902, and a program or instructions stored in the memory 902 and executable on the processor 901. For example, when the communications device 900 is a terminal and when the program or the instructions are executed by the processor 901, the processes of the foregoing embodiment of the HARQ-ACK feedback method are implemented, with the same technical effects achieved. When the communications device 900 is a network-side device and when the program or the instructions are executed by the processor 901, the processes of the foregoing embodiment of the HARQ-ACK feedback method are implemented, with the same technical effects achieved. To avoid repetition, details are not described herein again.

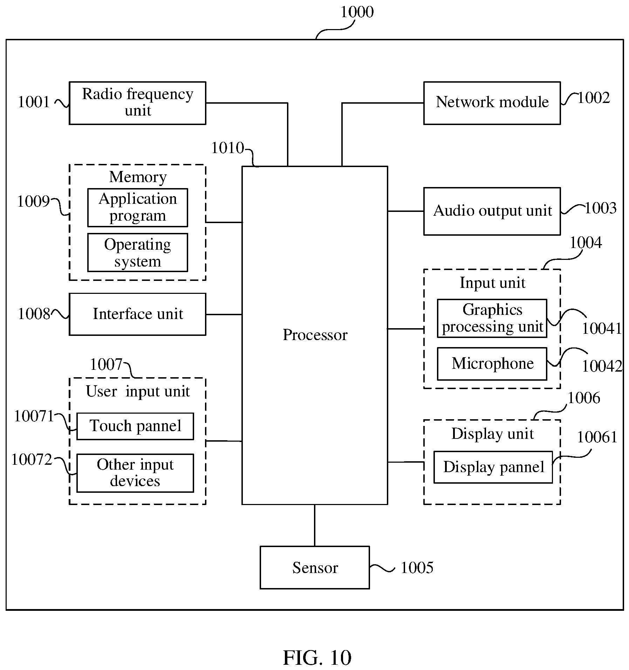

FIG. 10 is a schematic diagram of a hardware structure of a terminal for implementing the embodiments of this application.

The terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art can understand that the terminal 1000 may further include a power supply (for example, a battery) supplying power to all components, and the power supply may be logically connected to the processor 1010 through a power management system. In this way, functions such as charge management, discharge management, and power consumption management are implemented by using the power management system. The structure of the terminal shown in FIG. 10 does not constitute any limitation on the terminal. The terminal may include more or fewer components than those shown in the figure, or a combination of some components, or the components disposed differently. Details are not repeated herein.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, and the like. The user input unit 1007 may include a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a joystick, and the like. Details are not described herein.

In this embodiment of this application, the radio frequency unit 1001 receives downlink data from a network-side device, and then sends the downlink data to the processor 1010 for processing; and also sends uplink data to the network-side device. Generally, the radio frequency unit 1001 includes but is not limited to an antenna, at least one amplifier, a transceiver, a coupler, a low noise amplifier, a duplexer, and the like.

The memory 1009 may be configured to store software programs or instructions and various data. The memory 1009 may include a program or instruction storage area and a data storage area. The program or instruction storage area may store an operating system, an application program or instruction required by at least one function (for example, a sound playback function or an image playback function), and the like. In addition, the memory 1009 may include a high-speed random access memory, and may further include a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory, for example, at least one disk storage device, a flash memory device, or another non-volatile solid-state storage device.

The processor 1010 may include one or more processing units. Optionally, an application processor and a modem processor may be integrated in the processor 1010. The application processor primarily processes an operating system, user interfaces, application programs or instructions, and the like. The modem processor primarily processes radio communication, for example, being a baseband processor. It can be understood that the modem processor may alternatively be not integrated in the processor 1010.

The processor 1010 is configured to divide a plurality of physical downlink shared channels PDSCHs into one or more PDSCH groups; and the radio frequency unit 1001 is configured to feed back a HARQ-ACK for each PDSCH group.

In this embodiment of this application, the terminal divides the plurality of PDSCHs into one or more PDSCH groups, and feeds back a HARQ-ACK for each PDSCH group. Because the number of PDSCH groups is less than the number of the plurality of PDSCHs, this helps reduce the number of feedback HARQ-ACK bits and reduce feedback overheads.

The terminal 1000 provided in this embodiment of this application can further implement the processes of the HARQ-ACK feedback method embodiments, with the same technical effects achieved. To avoid repetition, details are not described herein again.

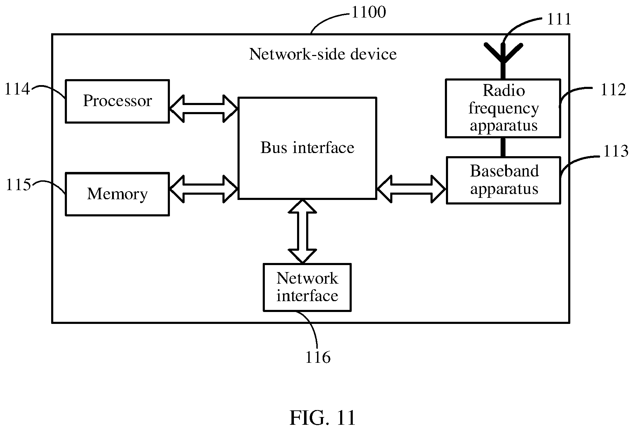

Specifically, an embodiment of this application further provides a network-side device. As shown in FIG. 11, the network device 1100 includes an antenna 111, a radio frequency apparatus 112, and a baseband apparatus 113. The antenna 111 is connected to the radio frequency apparatus 112. In an uplink direction, the radio frequency apparatus 112 receives information by using the antenna 111, and sends the received information to the baseband apparatus 113 for processing. In a downlink direction, the baseband apparatus 113 processes to-be-sent information, and sends the information to the radio frequency apparatus 112; and the radio frequency apparatus 112 processes the received information and then sends the information out by using the antenna 111.

The frequency band processing apparatus may be located in the baseband apparatus 113. The method performed by the network-side device in the foregoing embodiments may be implemented in the baseband apparatus 113, and the baseband apparatus 113 includes a processor 114 and a memory 115.

The baseband apparatus 113 may include, for example, at least one baseband board, where a plurality of chips are disposed on the baseband board. As shown in FIG. 11, one of the chips, for example, the processor 114, is connected to the memory 115, to invoke a program in the memory 115 to perform the operation of the network device shown in the foregoing method embodiments.

The baseband apparatus 113 may further include a network interface 116, configured to exchange information with the radio frequency apparatus 112, where the interface is, for example, a common public radio interface (common public radio interface, CPRI for short).

Specifically, the network-side device in this embodiment of the present invention further includes: instructions or a program stored in the memory 115 and executable on the processor 114. The processor 114 invokes the instructions or program in the memory 115 to execute the method executed by the modules shown in FIG. 8, with the same technical effects achieved. To avoid repetition, details are not described herein again.

An embodiment of the present invention further provides a readable storage medium, where a program or an instruction is stored in the readable storage medium. When the program or instruction is executed by a processor, the processes of the foregoing HARQ-ACK feedback method embodiment can be implemented, with same technical effects achieved. To avoid repetition, details are not described herein again.

The processor may be a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface, the communications interface is coupled to the processor, and the processor is configured to execute a program or instructions to implement the processes of the foregoing HARQ-ACK feedback method embodiments, with the same technical effects achieved. To avoid repetition, details are not repeated herein.

It should be understood that the chip mentioned in this embodiment of this application may also be referred to as a system-on-chip, a system chip, a system-on-α-chip, or a system on a chip, or the like.

An embodiment of this application further provides a computer program product, where the computer program product is stored in a non-volatile storage medium, and the computer program product is executed by at least one processor to implement the processes of the foregoing HARQ-ACK feedback method embodiments, with the same technical effects achieved. To avoid repetition, details are not repeated herein.

An embodiment of this application further provides a communications device, configured to perform the processes of the foregoing HARQ-ACK feedback method embodiment, with the same technical effects achieved. To avoid repetition, details are not described herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. Furthermore, it should be noted that, in the scope of the method and apparatus in the embodiments of this application, execution of the functions is not limited to the order shown or described, and the functions may alternatively be executed in a substantially simultaneous manner or in a reverse order. For example, the described method may be performed in an order different from that described, and steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A hybrid automatic repeat request acknowledgement HARQ-ACK feedback method, the method comprising:
dividing, by a terminal, a plurality of physical downlink shared channels PDSCHs into one or more PDSCH groups; and
feeding back, by the terminal, a HARQ-ACK for each PDSCH group.

2. The method according to claim 1, wherein
the plurality of PDSCHs are scheduled by one physical downlink control channel PDCCH; or
the plurality of PDSCHs are scheduled by a plurality of PDCCHs, and each of the plurality of PDCCHs schedules one or more PDSCHs.

3. The method according to claim 2, wherein indexes of Q PDSCHs comprised in the PDSCH group are consecutive, the indexes are determined in chronological order of the plurality of PDSCHs, and Q is a positive integer.

4. The method according to claim 1, wherein a number of the plurality of PDSCHs is N, a number of the PDSCH groups is M, at least (M-1) of the PDSCH groups comprise a same number of PDSCHs, and 1 ≤ M ≤ N, wherein M and N are integers.

5. The method according to claim 1, wherein at least two of the PDSCH groups comprise different numbers of PDSCHs.

6. The method according to any one of claims 1 to 5, wherein the PDSCH group comprises Q PDSCHs, Q is a positive integer, and Q is obtained based on at least one of following:
being predefined;
being determined according to a predefined rule;
being configured by higher layer; and
being indicated by a network-side device.

7. The method according to claim 6, wherein the method further comprises: determining, by the terminal, Q based on at least one of following:
subcarrier spacing SCS size;
control channel element CCE aggregation levels of one or more PDCCHs for scheduling the plurality of PDSCHs; and
modulation and coding scheme MCS for the plurality of PDSCHs.

8. The method according to claim 6, wherein Q is obtained according to the predefined rule, and the predefined rule comprises a predetermined duration; and
the dividing, by a terminal, a plurality of PDSCHs into one or more PDSCH groups comprises:
for the plurality of PDSCHs, dividing, by the terminal, one or more PDSCHs within the predetermined duration into one PDSCH group, to obtain the one or more PDSCH groups.

9. The method according to claim 8, wherein the dividing, by the terminal, one or more PDSCHs within the predetermined duration T into one PDSCH group comprises:
determining, by the terminal, a start time T1 of the predetermined duration, and in chronological order of the plurality of PDSCHs, dividing one or more PDSCHs within (T1+T) into one PDSCH group; wherein
an interval between a start time of first PDSCH in the PDSCH group and a start time of last PDSCH is less than or equal to T, or an interval between the start time of the first PDSCH in the PDSCH group and an end time of the last PDSCH is less than or equal to T.

10. The method according to claim 6, wherein Q is obtained according to an indication of the network-side device; and the method further comprises one of following:
receiving, by the terminal, first indication information of the network-side device, wherein the first indication information is used to indicate one Q, and the one Q is applicable to each of the PDSCH groups;
receiving, by the terminal, second indication information of the network-side device, wherein the second indication information is used to indicate a plurality of Qs, and the plurality of Qs are respectively applicable to the plurality of PDSCH groups; and
receiving, by the terminal, third indication information of the network-side device, wherein the third indication information is used to indicate one Q in a preconfigured set, and the one Q is applicable to each of the PDSCH groups.

11. The method according to claim 1, wherein one HARQ-ACK is fed back for each of the PDSCH groups.

12. The method according to claim 11, wherein
in a case that monitoring results of PDSCHs in the PDSCH group are all ACK, the HARQ-ACK corresponding to the PDSCH group is ACK; and
in a case that a monitoring result of at least one PDSCH in the PDSCH group is NACK, the HARQ-ACK corresponding to the PDSCH group is NACK.

13. The method according to claim 1, wherein the dividing, by a terminal, a plurality of PDSCHs into one or more PDSCH groups comprises:
in a case that no code block group CBG-based transmission is configured for a serving cell in which the plurality of PDSCHs are located, dividing, by the terminal, the plurality of PDSCHs into one or more PDSCH groups.

14. A HARQ-ACK feedback method, wherein the method comprises:
receiving, by a network-side device, a HARQ-ACK; wherein
the HARQ-ACK is fed back for each PDSCH group by a terminal after the terminal divides a plurality of PDSCHs into one or more PDSCH groups.

15. The method according to claim 14, wherein the method further comprises: sending a PDCCH; wherein
the plurality of PDSCHs are scheduled by one PDCCH; or
the plurality of PDSCHs are scheduled by a plurality of PDCCHs, and each of the plurality of PDCCHs schedules one or more PDSCHs.

16. The method according to claim 15, wherein indexes of Q PDSCHs comprised in the PDSCH group are consecutive, the indexes are determined in chronological order of the plurality of PDSCHs, and Q is a positive integer.

17. The method according to claim 14, wherein a number of the plurality of PDSCHs is N, a number of the PDSCH groups is M, at least (M-1) of the PDSCH groups comprise a same number of PDSCHs, and 1 ≤ M ≤ N, wherein M and N are integers.

18. The method according to claim 14, wherein at least two of the PDSCH groups comprise different numbers of PDSCHs.

19. The method according to any one of claims 14 to 18, wherein the PDSCH group comprises Q PDSCHs, Q is a positive integer, and Q is obtained based on at least one of following:
being predefined;
being determined according to a predefined rule;
being configured by higher layer; and
being indicated by a network-side device.

20. The method according to claim 19, wherein Q is determined by the terminal based on at least one of following:
subcarrier spacing SCS size;
control channel element CCE aggregation levels of one or more PDCCHs for scheduling the plurality of PDSCHs; and
modulation and coding scheme MCS for the plurality of PDSCHs.

21. The method according to claim 19, wherein the method further comprises one of following:
sending first indication information, wherein the first indication information is used to indicate one Q, and the one Q is applicable to each of the PDSCH groups;
sending second indication information, wherein the second indication information is used to indicate a plurality of Qs, and the plurality of Qs are respectively applicable to the plurality of PDSCH groups; and
sending third indication information, wherein the third indication information is used to indicate one Q in a preconfigured set, and the one Q is applicable to each of the PDSCH groups.

22. The method according to claim 14, wherein one HARQ-ACK is fed back for each of the PDSCH groups.

23. The method according to claim 22, wherein
in a case that monitoring results of PDSCHs in the PDSCH group are all ACK, the HARQ-ACK corresponding to the PDSCH group is ACK; and
in a case that a monitoring result of at least one PDSCH in the PDSCH group is NACK, the HARQ-ACK corresponding to the PDSCH group is NACK.

24. The method according to claim 14, wherein no code block group CBG-based transmission is configured for a serving cell in which the plurality of PDSCHs are located.

25. A terminal, comprising:
a grouping module, configured to divide a plurality of PDSCHs into one or more PDSCH groups; and
a sending module, configured to feed back a HARQ-ACK for each PDSCH group.

26. A network-side device, comprising:
a receiving module, configured to receive a HARQ-ACK; wherein
the HARQ-ACK is fed back for each PDSCH group by a terminal after the terminal divides a plurality of PDSCHs into one or more PDSCH groups.

27. A terminal, comprising a processor, a memory, and a program or instructions stored in the memory and executable on the processor, wherein when the program or instructions are executed by the processor, the HARQ-ACK feedback method according to any one of claims 1 to 13 is implemented.

28. A network-side device, comprising a processor, a memory, and a program or instructions stored in the memory and executable on the processor, wherein when the program or instructions are executed by the processor, the HARQ-ACK feedback method according to any one of claims 14 to 24 is implemented.

29. A readable storage medium, wherein a program or instructions are stored in the readable storage medium; and when the program or the instructions are executed by a processor, the HARQ-ACK feedback method according to any one of claims 1 to 13 is implemented, or the HARQ-ACK feedback method according to any one of claims 14 to 24 is implemented.

30. A chip, wherein the chip comprises a processor and a communications interface, the communications interface is coupled to the processor, and the processor is configured to execute a program or instructions to implement the HARQ-ACK feedback method according to any one of claims 1 to 13, or the HARQ-ACK feedback method according to any one of claims 14 to 24.

31. A computer program product, wherein the computer program product is stored in a non-volatile readable storage medium, and the computer program product is executed by at least one processor to implement the HARQ-ACK feedback method according to any one of claims 1 to 13 or the HARQ-ACK feedback method according to any one of claims 14 to 24.

32. A communications device, configured to execute the HARQ-ACK feedback method according to any one of claims 1 to 13 or the HARQ-ACK feedback method according to any one of claims 14 to 24.
